# EUROPEAN PATENT SPECIFICATION

(11) **EP 0 525 476 B1**
(45) Date of publication and mention of the grant of the patent: **15.03.1995**
(21) Application number: 92111767.7
(22) Date of filing: 10.07.1992
(51) Int. Cl.: B05B 11/00, G01F 13/00, G01F 11/00

(54) **Push-button dosage device with stroke counter**
Dosiervorrichtung mit Betätigungsknopf und Impulszähler
Dispositif de dosage actionné par bouton-poussoir avec compteur d'impulsions

(30) Priority: 23.07.1991 IT MI910673 U
(43) Date of publication of application: 03.02.1993
(73) Proprietor: SANDOZ PRODOTTI FARMACEUTICI S.p.A., 20135 Milano (IT)
(72) Inventor: Lazza, Giorgio, I-20146 Milano (IT)
(74) Representative: Modiano, Guido, Dr.-Ing.

(56) References cited:
- EP-A- 0 114 617

## Description

The present invention relates to a push-button dosage device with stroke counter.

As is known, push-button dosage devices with stroke counter are already commercially available and are applied to medicament bottles, sprays and the like so as to indicate the number of strokes performed by the push button on which pressure is exerted, creating a progressive count of the doses dispensed.

In known devices, such as for example the one disclosed in patent EP 0 114 617, the counting scale does not indicate the initial strokes which must be performed in order to prime the pump which draws the product, for example a medical one, contained in the bottle.

The aim of the invention is to provide a dosage device wherein the user can have a clear indication not only of the number of strokes performed, i.e. the number of dispensing actions performed, but also of the strokes which he must perform in order to activate the correct operation of the device.

Within the scope of the above aim, a particular object of the invention is to provide a dosage device which allows the user to easily detect the type of actuation he must perform and the last executable dispensing action.

Another object of the present invention is to provide a push-button dosage device with stroke counter which, by virtue of its peculiar characteristics of execution, is capable of giving the greatest assurances of reliability and safety in use.

Not least object of the present invention is to provide a dosage device which can be easily obtained starting from commonly, commercially available elements and materials and is furthermore competitive from a merely economic point of view.

This aim, the objects mentioned and others which will become apparent hereinafter are achieved by a push-button dosage device with stroke counter, according to the invention, comprising an outer skirt axially slideable with respect to an inner body which is rotatable in a stepwise manner and is associable with an element coupleable to a bottle, said inner body being provided with a counting scale which is visible at an opening of said skirt, characterized in that said counting scale is provided, in succession, with an initial sector, at least one non-dispensing indication sector, a sector indicating readiness for use and a plurality of sectors identified by progressive numbers.

Further characteristics and advantages will become apparent from the detailed description of a push-button dosage device with stroke counter, illustrated only by way of non-limitative example in the accompanying drawings, wherein:
figure 1 is a schematic perspective view of the dosage device according to the invention, applied to a bottle;
figure 2 is a partially exploded view of the dosage device, with the counting scale partially removed;
figure 3 is a partially cutout view of the counting scale applied to the inner body;
figure 4 is a view of the counting scale arranged flat.

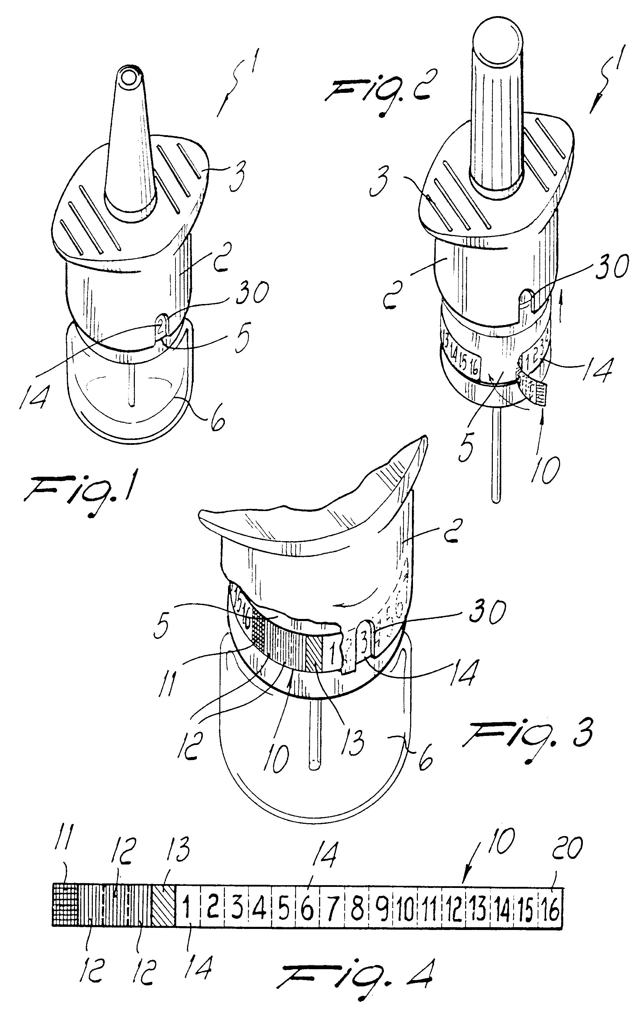

With reference to the above figures, the push-button dosage device with stroke counter, generally designated by the reference numeral 1, comprises an outer skirt 2 which is provided with upper wings 3 for its actuation in a push-button-like manner and can slide axially with respect to an inner body 5 which can rotate in a stepwise manner and is associable with an element which can be coupled to a bottle 6.

The type of mechanism interposed is not described in detail since it does not constitute the subject of the present invention and is for example of the type disclosed in the previously mentioned patent EP 0 114 617.

A counting scale, generally designated by the reference numeral 10, is provided on the inner body 5 and is preferably but not necessarily constituted by a portion of adhesive tape which can be applied circumferentially on the inner body 5 so that its ends meet.

The peculiarity of the invention is constituted by the fact that said counting scale 10 is provided, in succession, with an initial sector 11, marked for example in black, which is followed by a plurality of sectors, preferably three sectors 12, which indicate the non-dispensing condition; said sectors 12, which in practice correspond to the actuations required to prime the pump, are advantageously provided red.

After the three red sectors, there is a sector 13, indicating readiness for use, which is preferably green.

After the ready sector 13 there are counting sectors 14 which bear progressive numeric indications.

The last of the counting sectors, designated by the numeral 20, advantageously has a coloring which differs from the other ones in order to visually indicate that the user has performed all the dispensing actions allowed by the bottle.

In the specific embodiment, the counting sectors are numbered progressively with the numerals 1 to 16, and 16 is indicated with a red coloring, so as to differentiate it from the remaining counting sectors.

The various counting sectors are individually visible at the opening 30 which is provided at the lower free end of the outer skirt 2.

From what has been described above, it can thus be seen that the invention achieves the intended aim and objects, and in particular the fact is stressed that the particular type of counting scale allows the user to immediately perceive whether he has performed a correct dispensing action or whether he is in an initial region in which the dispensing of the product has not been performed or in any case has been performed incorrectly, since during the initial step it is necessary to prime the pump of the device.

From what has been described above it can thus be seen that the invention achieves the intended aim and objects, and in particular the extreme constructive simplicity and the rationality of the counting scale are stressed once more.

In practice, the materials employed, so long as compatible with the specific use, as well as the dimensions and contingent shapes, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Push-button dosage device (1) with stroke counter, comprising an outer skirt (2) axially slideable with respect to an inner body (5) which is rotatable in a stepwise manner and is associable with an element (6) coupleable to a bottle, said inner body (5) being provided with a counting scale (10) which is visible at an opening (30) of said skirt (2), characterized in that said counting scale (10) is provided, in succession, with an initial sector (11), at least one non-dispensing indication sector (12), a sector (13) indicating readiness for use and a plurality of counting sectors (14) identified by progressive numbers.

2. Dosage device according to claim 1, characterized in that said initial sector (11) is identified by the color black.

3. Dosage device according to the preceding claims, characterized in that it comprises three sectors (12) indicating the non-dispensing condition.

4. Dosage device according to one or more of the preceding claims, characterized in that said sectors (12) indicating the non-dispensing condition are identified by a red coloring.

5. Dosage device according to one or more of the preceding claims, characterized in that said sector (13) for indicating readiness for use is identified by a green coloring.

6. Dosage device according to one or more of the preceding claims, characterized in that the last one of said counting sectors (14) is visually differentiated with respect to the remaining counting sectors.

7. Dosage device according to one or more of the preceding claims, characterized in that the progressive numerals of said counting sectors (14) are black, the last one of said progressive numerals being red.

8. Dosage device according to one or more of the preceding claims, characterized in that said counting scale (10) is applied on an adhesive tape which is arranged circumferentially on said inner body (5).

## Patentansprüche

1. Dosiervorrichtung (1) mit Betätigungsknopf und Impulszähler, mit einer äußeren Einfassung (2), welche axial gleitend bzgl. eines inneren Körpers (5) ist, der schrittweise drehbar und mit einem Element (6) verbindbar ist, welches an eine Flasche koppelbar ist, wobei der innere Körper (5) mit einer Zählskala (10) versehen ist, die an einer Öffnung (30) an der Einfassung (2) sichtbar ist, dadurch gekennzeichnet, daß die Zählskala (10) aufeinanderfolgend versehen ist mit einem Anfangssektor (11), mindestens einem keiner Ausgabe entsprechenden Anzeigensektor (12), einem Sektor (13), welcher die Bereitschaft zum Gebrauch anzeigt und mehreren Zählsektoren (14), welche mit aufsteigenden Ziffern bezeichnet sind.

2. Dosiervorrichtung nach Anspruch 1, dadurch gekennzeichnet, daß der Anfangssektor (11) durch eine schwarze Farbe angezeigt wird.

3. Dosiervorrichtung nach einem der vorstehenden Ansprüche, dadurch gekennzeichnet, daß sie drei Sektoren (12) umfaßt, welche keine Ausgabebedingung anzeigen.

4. Dosiervorrichtung nach einem oder mehreren der vorstehenden Ansprüche, dadurch gekennzeichnet, daß die Sektoren (12), welche keine Ausgabebedingung anzeigen, mit einer roten Färbung identifiziert werden.

5. Dosiervorrichtung nach einem oder mehreren der vorstehenden Ansprüche, dadurch gekennzeichnet, daß der Sektor (13) zum Anzeigen der Bereitschaft zum Gebrauch durch eine grüne Färbung identifiziert wird.

6. Dosiervorrichtung nach einem oder mehreren der vorstehenden Ansprüche, dadurch gekennzeichnet, daß der letzte der Zählsektoren (14) visuell unterscheidlich von anderen Zählsektoren ist.

7. Dosiervorrichtung nach einem oder mehreren der vorstehenden Ansprüche, dadurch gekennzeichnet, daß die aufsteigenden Ziffern der Zählsektoren (14) schwarz sind, und die letzte der aufsteigenden Ziffern rot ist.

8. Dosiervorrichtung nach einem oder mehreren der vorstehenden Ansprüche, dadurch gekennzeichnet, daß die Zählskala (10) auf einem Klebeband angebracht ist, welches rund um den inneren Körper (5) angeordnet wird.

## Revendications

1. Dispositif de dosage à bouton-poussoir (1) avec compteur d'impulsions, comprenant une jupe externe (2) coulissable axialement par rapport à un corps interne (5) qui est rotatif d'une façon pas à pas, et est susceptible d'être associé à un élément (6) destiné à être couplé à un flacon, ledit corps interne (5) étant muni d'une échelle de comptage (10) qui est visible par une ouverture (30) de ladite jupe (2),
caractérisé en ce que ladite échelle de comptage (10) est munie, successivement, d'un secteur initial (11), d'au moins un secteur d'indication de non-distribution (12), d'un secteur (13) indiquant la disponibilité à l'emploi et d'une pluralité de secteurs de comptage (14) identifiés par des nombres progressifs.

2. Dispositif de dosage selon la revendication 1,
caractérisé en ce que ledit secteur initial (11) est identifié par la couleur noire.

3. Dispositif de dosage selon les revendications précédentes,
caractérisé en ce qu'il comprend trois secteurs (12) indiquant la condition de non-distribution.

4. Dispositif de dosage selon l'une ou plusieurs des revendications précédentes,
caractérisé en ce que lesdits secteurs (12) indiquant la condition de non-distribution sont identifiés par une coloration rouge.

5. Dispositif de dosage selon l'une ou plusieurs des revendications précédentes,
caractérisé en ce que ledit secteur (13) pour indiquer la disponibilité à l'emploi est identifié par une coloration verte.

6. Dispositif de dosage selon l'une ou plusieurs des revendications précédentes,
caractérisé en ce que le dernier desdits secteurs de comptage (14) est visuellement différencié par rapport aux secteurs de comptage restants.

7. Dispositif de dosage selon l'une ou plusieurs des revendications précédentes,
caractérisé en ce que les nombres progressifs desdits secteurs de comptage (14) sont noirs, le dernier desdits nombres progressifs étant rouge.

8. Dispositif de dosage selon l'une ou plusieurs des revendications précédentes,
caractérisé en ce que ladite échelle de comptage (10) est appliquée sur un ruban adhésif qui est agencé périphériquement sur ledit corps interne (5).
